# EUROPEAN PATENT SPECIFICATION

(11) **EP 2 908 001 B1**
(45) Date of publication and mention of the grant of the patent: **21.09.2016**
(21) Application number: 14154895.8
(22) Date of filing: 12.02.2014
(51) Int. Cl.: F03D 1/06

(54) **Means for alleviating strain on a wind turbine rotor blade**
Mittel zur Verminderung der Belastung eines Windturbinenrotorblatts
Moyens permettant de soulager la contrainte exercée sur une pale de rotor de turbine éolienne

(43) Date of publication of application: 19.08.2015
(73) Proprietor: Siemens Aktiengesellschaft, 80333 München (DE)
(72) Inventor: Gonzalez, Alejandro Gomez, 8000 Aarhus (DK)

(56) References cited:
- EP-A1- 2 647 835
- WO-A2-2011/088834
- US-A1- 2004 105 752
- US-A1- 2011 042 524
- US-A1- 2011 084 174
- Yamaguchi ET AL: "Basic Theory of Plates and Elastic Stability", , 31 December 1999 (1999-12-31), pages 1-30, XP055126395, Retrieved from the Internet: URL:http://www.crcnetbase.com/doi/pdfplus/ 10.1201/9781439834350.ch1?queryID= [retrieved on 2014-07-02]

## Description

### FIELD OF THE INVENTION

The invention relates to an aerodynamic device which is attached to a wind turbine rotor blade and which is configured for alleviating strain on the wind turbine rotor blade.

### BACKGROUND OF THE INVENTION

Aerodynamic devices which are attached to wind turbine rotor blades such as flaps or serrated panels are commonly used to enhance the aerodynamic performance of a wind turbine rotor during normal operation. However, during abnormal operation such as over-speed situations, emergency stops or extreme wind gusts, such an aerodynamic device can contribute to a strain of the wind turbine in an undesired way by considerably increasing the strain on some of the main components of the wind turbine such as the wind turbine rotor blades, the hub, the tower, and the main bearing.

Solutions to this problem mainly relate to the use of active wind flow control mechanisms which control and regulate these aerodynamic devices in order to prevent high loads in abnormal operation conditions. For instance, the international patent application WO 2011/064214 proposes active flaps by the use of mechanical elements. The US patent 7,922,450 B2, for instance, uses piezoelectric elements to regulate a flap at the trailing edge of a wind turbine rotor blade.

Aerodynamic devices or add-ons are not only used in the field of wind turbines but are also used in the field of helicopters. However, for the case of wind turbines, the option of using mechanical elements to control flaps or other aerodynamic devices is normally limited because the use of complex mechanisms which suffer e.g. from fatigue, icing or wear are problematic if applied to wind turbines. Especially for offshore wind turbines it is desired to use a system which is easy for maintenance and which is relatively fail-safe. On the other hand, the use of electric components or piezoelectric components is usually in conflict with the requirements of the lightning protection systems for wind turbine rotor blades.

The European patent application EP 2 647 835 A1 relates to a flap arrangement for a wind turbine rotor blade, which arrangement avoids active control mechanisms. Instead, the disclosed flap arrangement comprises a flap portion which is passively moveable with respect to a wind inflow angle. How ever, the disclosed concept is not aimed at reducing the strain on the rotor blade, but aims at providing a method for enhancing the aerodynamic performance of a wind turbine rotor blade.

The US patent application US 2011/0042524 A1 discloses a concept how to passively mitigate aerodynamic loads. It comprises a structural insert which is inserted in the rotor blade body, e.g. as part of the suction side or pressure side shell of the rotor blade.

Thus, there is a need to propose a way of alleviating strain during the operation of wind turbine rotor blades, wherein the solution shall be reliable and shall require low maintenance effort.

### DESCRIPTION OF THE INVENTION

This aim is achieved by the independent claims. Advantageous embodiments are described in the dependent claims.

In accordance with the invention there is provided an arrangement comprising a wind turbine rotor blade and an aerodynamic device, wherein the aerodynamic device is attached to the wind turbine rotor blade and comprises a buckling element. A stability limit and an elastic limit can be assigned to the buckling element, wherein the stability limit is smaller than the elastic limit. The buckling element is configured to deform elastically if a load, which is smaller than the elastic limit, acts on the buckling element. The buckling element abruptly deforms if a load of about the size of the stability limit acts on the buckling element, such that the aerodynamic properties of the arrangement change and strain on the wind turbine rotor blade is passively alleviated.

One aspect of the invention is to alleviate strain on the wind turbine rotor blade, and thus, ultimately, enhance the aerodynamic performance of the wind turbine.

The aerodynamic device, which is also denoted as an aerodynamic add-on, is connected to the wind turbine rotor blade. On the one hand, the buckling element can solely be one (of several) parts of the aerodynamic device. On the other hand, the aerodynamic device consists of the buckling element. In the first alternative, the buckling element may be the part that actually connects the wind turbine rotor blade and the remaining part(s) of the aerodynamic device, i.e. the remaining aerodynamic device. In the second alternative, the aerodynamic device is configured such that its material properties already encompass a buckling functionality and thus the whole aerodynamic device can be described as the buckling element. In other words, the buckling element and the aerodynamic device build one entity. In yet other words, the buckling element and the aerodynamic device build one single item.

In one embodiment of the first alternative, the buckling element is the only direct connection between the remaining aerodynamic device and the wind turbine rotor blade. In another embodiment of the first alternative, the buckling element is one of several connections between the remaining aerodynamic device and the wind turbine rotor blade.

In another embodiment, a plurality of buckling elements connects the remaining aerodynamic device and the wind turbine rotor blade.

The buckling element can have various shapes. It can e.g. have the shape of a plate or of a cylinder. It can also have any other suitable shape.

Different load limits may be assigned or attributed to the buckling element. In the context of this application, a load generally refers to a force which is acting on an object, such as e.g. the buckling element. Thus, a load may act as a compressive force. Alternatively, a load may also induce a bending moment.

The strain on the wind turbine or on parts of the wind turbine refers to, in the context of this application, more abstractly to the burden or loading of the wind turbine or parts of it, respectively.

A first load limit of the buckling element is called the stability limit.

The stability limit may be described as the point where the amount of deformation, or rate of deformation, abruptly changes. In other words, if a certain load acts on the buckling element, a certain deformation of the aerodynamic device results. If the load is approaching the stability limit, then an incremental increase of the load has the effect that the buckling element abruptly changes its shape and significantly deforms.

A second load limit of the buckling element is its elastic limit. The elastic limit refers to a load which is greater than the stability limit. The elastic limit is defined such that for any load smaller than the elastic limit the buckling element behaves elastically. In other words, if the buckling element is deformed by a load which is smaller than the elastic limit and subsequently the buckling element is de-loaded, then the deformation also vanishes or disappears. Yet in other words, the deformation is a reversible deformation. Thus, if a load, e.g. a compressive force or a bending moment, is applied to the buckling element and the load is smaller than the stability limit, a certain deformation in a certain direction of the applied load occurs to the buckling element. By increasing the load, the deformation increases. This increase of the deformation may for example happen with a certain ratio. If the load reaches the stability limit, then the ratio of deformation changes abruptly. However, as long as the load is smaller than the elastic limit, this deformation is reversible. Only when exceeding the elastic limit, the buckling element is deformed in-elastically, i.e. irreversibly.

An important aspect of the invention is that the buckling element can be configured such that the stability limit corresponds to extreme loads where a fundamental change of the position of the aerodynamic device relative to the wind turbine rotor blade is desired. Thus, if for example extreme gusts hit the wind turbine rotor blade with the aerodynamic device the buckling element deforms or buckles and thus gives the opportunity to alleviate the total strain which is experienced by the wind turbine, in particular the wind turbine rotor blade.

In other words, by carefully designing the parameters of the buckling element, e.g. regarding its material, its Young modulus and/or its thickness, buckling can be induced at predetermined conditions. At these predetermined conditions the structure becomes instable and prone to buckling. Thus, the equivalent aerodynamic properties, i.e. its aerodynamic characteristics, of the wind turbine rotor blade are modified in such a way that the lift at low angles of attack can be increased, while having a low penalty in maximum lift coefficient. The strain on the wind turbine rotor blade is in general both a function of the lift coefficient as well as of the relative flow speed of the wind flow. The strain may linearly increase with an increase in lift coefficient, and may increase proportionally to the square of the relative flow speed. The parameters of the buckling element can be carefully designed in order to induce buckling at the desired combination of lift coefficient and relative flow speed.

A general advantage of the arrangement with the wind turbine rotor blade and the aerodynamic device is that the strain on the wind turbine in certain abnormal conditions is alleviated passively without having to implement mechanical activations, piezo-electrical elements, or other type of actuator elements such as pneumatic or hydraulic activations. A buckling element requires little maintenance and can be constructed reliably and robustly.

Exemplarily, the buckling element could be made of a plastic or metallic material. In the latter case, it is advantageous that the metallic material be isolated due to potential lightning striking of the arrangement comprising the wind turbine rotor blade and the aerodynamic device.

In one embodiment of the invention, the ratio of the load acting on the buckling element and its deformation is substantially constant for loads that are smaller than the stability limit.

Mathematically speaking, for loads that are smaller than the stability limit there is a substantially linear relationship between the load acting on the buckling element and its deformation.

In another embodiment of the invention, the average ratio of the load acting on the buckling element and its deformation is smaller for loads between the stability limit and the elastic limit, compared to the average ratio of the load acting on the buckling element and its deformation for loads smaller than the stability limit.

As the ratio of the load and the deformation is not necessarily constant neither for loads smaller than the stability limit or for loads between the stability limit and the elastic limit, it may be advantageous to compare the respective average ratios instead of actual ratios.

A load-deformation curve may be defined for characterizing the properties of the buckling element. The load-deformation curve is defined by the load acting on the buckling element versus its deformation. Furthermore, a first section and a second section can be assigned to the load-deformation curve, wherein the first section relates to loads smaller than the stability limit and the second section relates to loads between the stability limit and the elastic limit. Given these definitions, in an advantageous embodiment of the invention, the average slope of the load-deformation curve in the first section is greater than the average slope of the load-deformation curve in the second section.

In other words, the abrupt change of the deformation of the buckling element for loads of about the size of the stability limit changes occurs in such a way that the deformation significantly increases for these loads.

If, for example, the load-deformation curve is linear in the first section and/or the second section, the average slope equals the actual slope at any point in the first section and/or the second section of the load-deformation curve, respectively. If both sections are substantially linear, i.e. the load-deformation curve in both sections is substantially linear, the stability limit is also referred to a structural non-linearity or a buckling instability.

In one embodiment of the invention, the load-deformation curve features a constant slope in the first section and a constant or decreasing slope in the second section. A positive, but decreasing slope in the second section is also described as the fact that the load-deformation curve flattens in the second section.

In an advantageous embodiment, the average slope of the load-deformation curve in the first section is at least three times greater, in particular at least five times greater, than the average slope of the load-deformation curve in the second section.

In other words, the change in the slope around the stability limit is significant. More specifically, the decrease of the slope of the load-deformation curve around the stability limit is significant. The significantly smaller average slope of the load-deformation curve in the second section compared to the first section translates into a significantly increased deformation of the buckling element for loads exceeding the stability limit.

In another advantageous embodiment, for loads greater than the stability limit, the strain on the wind turbine is alleviated by the buckling element compared to an alternative arrangement with a rigid connection between the second portion of the wind turbine rotor blade and the second portion of the aerodynamic device.

In another advantageous embodiment, the buckling element is configured such that the size of the stability limit is adjusted such that an alleviation of the strain on the wind turbine rotor blade is realized for extreme loads on the wind turbine rotor blade, in particular extreme wind loads and/or extreme wind gusts.

An advantage of such a buckling element is that for extreme loads acting on the aerodynamic device and also on the wind turbine rotor blade the buckling element deforms considerably and due to the significant change in orientation or location of the aerodynamic device relative to the wind turbine rotor blade the strain on the wind turbine is alleviated. This is for example beneficial for the hub, the wind turbine rotor blade itself, the main bearing, or the pitch bearings of the wind turbine.

In another embodiment of the invention, the aerodynamic device comprises a flap and/or a serrated panel.

Potentially, the invention can also be combined with other aerodynamic devices such as gurney flaps, vortex generators or other aerodynamic add-ons.

In another advantageous embodiment, the aerodynamic device is attached to the wind turbine rotor blade at the trailing edge section of the wind turbine rotor blade. The trailing edge section is defined as the area around the trailing edge of the wind turbine rotor blade.

The trailing edge section may be defined such that it comprises the part of the wind turbine rotor blade which is surrounding the trailing edge and which ends at a chordwise position 20% of the total chord length away from the trailing edge.

Likewise, a suction side and a pressure side can be attributed to the wind turbine rotor blade. The aerodynamic device may advantageously be attached to the wind turbine rotor blade at the pressure side.

In another advantageous embodiment, the aerodynamic device is attached to the wind turbine rotor blade at the trailing edge, extending beyond the trailing edge. Attaching the aerodynamic device directly at the trailing edge might be particularly advantageous if the wind turbine rotor blade comprises a flat-back airfoil profile, which is a profile where the trailing edge is not a sharp edge but where a significant part of the trailing edge is built by a straight line, which may e.g. be substantially perpendicular to the chord line.

In another advantageous embodiment, the wind turbine rotor blade comprises a tip and a root, and the aerodynamic device is attached to the wind turbine rotor blade close to the tip.

An attachment of the aerodynamic device close to the tip has the advantage that the velocity of the portion of the wind turbine rotor blade is the higher the closer the portion is to the tip. Thus, the buckling element may be particularly beneficial if connected and arranged close to the tip of the wind turbine rotor blade.

However it could also be advantageous to place the aerodynamic device inboard, i.e. close to the root of the wind turbine rotor blade. In this case - from an aerodynamic point of view - the aerodynamic device could also be placed on the suction side.

In another advantageous embodiment, for a load exceeding the stability limit, the buckling element is deflected such that a wind flow from a leading edge of the wind turbine rotor blade to the trailing edge section along the pressure side is deflected towards the suction side, thus decreasing the aerodynamic lift of the wind turbine rotor blade.

Thus, in other words, the aerodynamic lift of the wind turbine rotor blade is increased as long as the buckling element is un-deflected. On the other hand, the aerodynamic lift of the wind turbine rotor blade is decreased if the buckling element is in a deflected state.

In another embodiment of the invention, the aerodynamic device prolongs a chord line of the wind turbine rotor blade.

Due to the prolongation of the chord line, the effective chord length of the wind turbine rotor blade is prolonged. A prolonged effective chord length may be advantageous due to the aerodynamic properties, e.g. the lift coefficient, of the wind turbine rotor blade.

In one embodiment of the invention, the arrangement is designed such that the load acting on the buckling element is mainly due to a compressive force, which is directed substantially parallel to the direction of the largest dimension of the buckling element.

If, for instance, the buckling element has the shape of a slender column comprising a relatively small base area and a relatively large longitudinal axis perpendicular to the base area, the buckling element may be arranged such with regard to the wind turbine rotor blade that the load acting as a compressive force acts in parallel to the longitudinal axis of the column. In this example, there might occur deformation both in a direction in parallel to the compressive force and perpendicular to the compressive force.

Exemplarily, the arrangement may comprise a first portion of the aerodynamic device which is directly connected to a first portion of the wind turbine rotor blade; and a second portion of the aerodynamic device which is connected to a second portion of the wind turbine rotor blade via the buckling element. Advantageously, the distance between the second portion of the aerodynamic device and the second portion of the wind turbine rotor blade decreases abruptly if a load of about the size of the stability limit is applied to the buckling element.

In another embodiment of the invention, the load acting on the buckling element induces a bending moment, which is directed substantially perpendicular to the direction of the largest dimension of the buckling element.

In another embodiment of the invention, the arrangement comprises a set of buckling elements comprising a first buckling element and at least a second buckling element. The first buckling element comprises a first stability limit and the second buckling element comprises a second stability limit. The first stability limit is smaller than the second stability limit.

An advantage of the set of buckling elements is that their respective stability limits can be adjusted such that for a first load equaling about the first stability limit and acting on the set of buckling elements, the first buckling element deforms abruptly and alleviates the strain on the wind turbine rotor blade. If the load acting on the set of buckling elements further increases and reaches the second stability limit, the second buckling element abruptly deforms and alleviates furthermore the strain on the wind turbine rotor blade.

This arrangement may also be referred to as an arrangement with cascading buckling elements.

The invention is also directed to the use of a buckling element for passively alleviating strain on a wind turbine rotor blade. Note that the buckling element is at least a part of an aerodynamic device, which aerodynamic device is arranged and prepared for being attached to the wind turbine rotor blade. A stability limit and an elastic limit, wherein the stability limit is smaller than the elastic limit, can be assigned to the buckling element. Furthermore, the buckling element is configured to deform elastically if a load, which is smaller than the elastic limit, acts on the buckling element; and the buckling element abruptly deforms if a load of about the size of the stability limit acts on the buckling element.

It shall be noted that, advantageously, the buckling element has one or several features which have been described above in the context of the arrangement comprising the wind turbine rotor blade and the aerodynamic device.

### BRIEF DESCRIPTION OF THE DRAWINGS

Embodiments of the invention are now described, by way of example only, with reference to the accompanying drawings, of which:
- Figure 1: shows a wind turbine rotor blade;
- Figure 2: shows a first embodiment of an arrangement comprising a wind turbine rotor blade and an aerodynamic device with an un-deformed buckling element;
- Figure 3: shows the arrangement of Figure 2 with a deformed buckling element;
- Figure 4: shows a part of the arrangement of Figure 2 focusing on the connection sections of the wind turbine rotor blade and the aerodynamic device;
- Figure 5: shows another embodiment of an aerodynamic device and a deformed buckling element;
- Figure 6: shows a compressive force acting on a buckling element;
- Figure 7: shows a load-deformation curve with a buckling instability;
- Figure 8: shows a second embodiment of an arrangement comprising a wind turbine rotor blade and an aerodynamic device with a set of un-deformed buckling elements;
- Figure 9a: shows an un-deformed buckling element of the set of buckling elements of Figure 8;
- Figure 9b: shows a deformed buckling element of the set of buckling elements of Figure 8; and
- Figure 10: shows a bending moment acting on a buckling element.

The illustration in the drawings is schematically. It should further be noted that numerals which refer to similar features or elements are referred to with the same numeral throughout the drawings.

### DESCRIPTION OF THE DRAWINGS

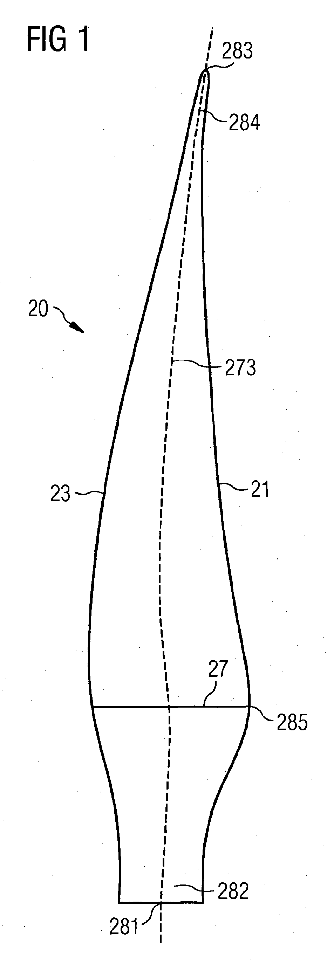

Figure 1 shows a wind turbine rotor blade 20 which is commonly used with wind turbines. The wind turbine rotor blade 20 comprises a root 281, which is surrounded by a root section 282. The root section 282 comprises the shape of a hollow circular cylinder. This is advantageous because typically the wind turbine rotor blade 20 is attached to a hub of a wind turbine at the root 281. As wind turbines often comprise pitch bearings such that the wind turbine rotor blade 20 can be pitched about a pitch axis, a circular cross section of the root 281 is advantageous.

The wind turbine rotor blade 20 furthermore comprises a tip 283, which is surrounded by a tip section 284. The tip section 284 is the part of the wind turbine rotor blade 20 which is furthest away from the root section 282. Between the root section 282 and the tip section 284, a shoulder 285 of the wind turbine rotor blade 20 is located. The shoulder 285 is assigned to the part of the wind turbine rotor blade 20 which has the largest chord length. The chord length is defined as the length of a chord line 27, the chord line 27 being perpendicular to the span 273 of the wind turbine rotor blade 20. Finally, the wind turbine rotor blade 20 comprises a trailing edge 21 and a leading edge 23.

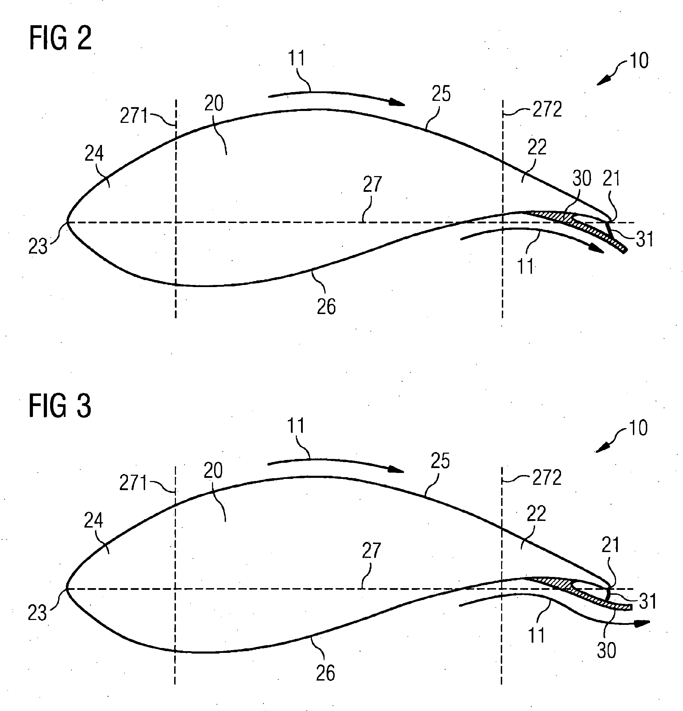

Figures 2 and 3 show a wind turbine rotor blade 20 in a cross sectional view. An aerodynamic device 30 is connected to the wind turbine rotor blade 20. The wind turbine rotor blade 20 and the aerodynamic device 30 both together form an arrangement 10. The wind turbine rotor blade 20 comprises a leading edge 23 and a trailing edge 21. The leading edge 23 is connected by a straight line with the trailing edge 21. The straight line is referred to as the chord line 27. The wind turbine rotor blade 20 furthermore comprises a leading edge section 24 which is delimited by a line perpendicular to the chord line 27 at a chordwise position of 20% chord length 271, as seen from the leading edge 23. Likewise, a trailing edge section 22 is defined and delimited by a line 272 which is perpendicular to the chord line 27 at a chordwise position of 80% chord length 272, as seen from the leading edge 23.

In Figures 2 and 3, the part between the leading edge 23 and the trailing edge 21 substantially above the chord line 27 is referred to as the suction side 25 of the wind turbine rotor blade 20, while the part between the leading edge 23 and the trailing edge 21 substantially below the chord length 27 is referred to as the pressure side 26.

The aerodynamic device 30 is connected to the trailing edge section 22 once directly and secondly via a buckling element 31.

The difference between the Figures 2 and 3 is that in Figure 2 the buckling element 31 is un-deformed. Thus, in Figure 2, a wind flow 11 which is flowing from the leading edge section 24 to the trailing edge section 22 is deflected at the trailing edge section 22 in direction to the pressure side 26. This is a scenario which is expected for loads which are smaller than the stability limit and which are acting on the buckling element 31. In the scenario shown in Figure 2 the wind flow 11 is deflected such that the aerodynamic performance of the wind turbine rotor blade 20 is increased compared to an alternative arrangement 10 without any aerodynamic device 30.

Figure 3, in contrast, shows a scenario where the buckling element 31 is deformed considerably due to an extreme load applied on the buckling element 31 in a direction substantially perpendicular to the chord line 27. The deformation of the buckling element 31 results in a deflection of the wind flow 11 flowing from the leading edge section 24 to the trailing edge section 22. The deflection of the wind flow 11 is such that it exits the trailing edge section 22 not towards the pressure side 26 of the wind turbine rotor blade 20 but towards the suction side 25 of the wind turbine rotor blade 20. This results in an alleviation or reduction of the load on the wind turbine as such including the wind turbine rotor blade 20. Note that the alleviation is due to a passive mechanism.

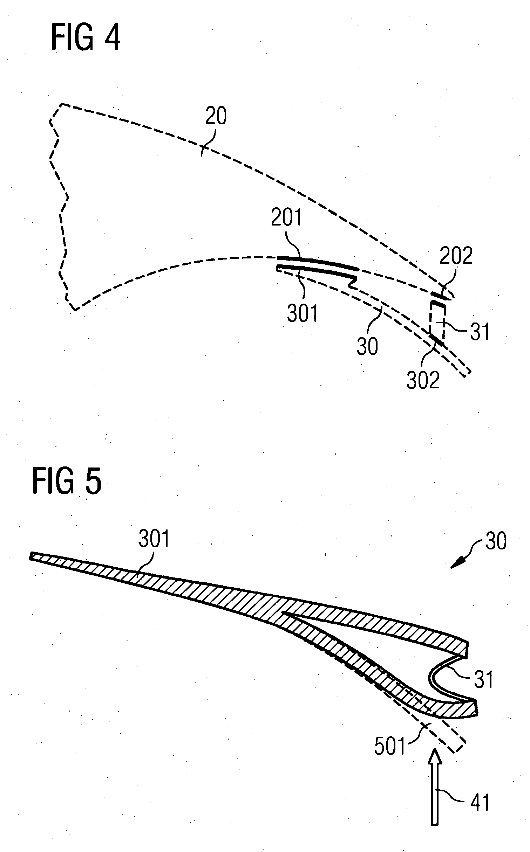

Figure 4 illustrates an exemplary position of the first and second portion of the aerodynamic device 301, 302 and the first and the second portion of the wind turbine rotor blade 201, 202. Note that for sake of clarity the aerodynamic device 30 is depicted separately from the wind turbine rotor blade 20. The wind turbine rotor blade 20 comprises a first portion 201 which is arranged and prepared to be connected to a first portion of the aerodynamic device 301. Likewise, the wind turbine rotor blade 20 comprises a second portion 202 which is arranged and prepared to be connected to the buckling element 31 which itself is connected to a second portion of the aerodynamic device 302.

Once the first portion of the wind turbine rotor blade 201 and the first portion of the aerodynamic device 301 are connected they form a direct connection. Once the second portion of the wind turbine rotor blade 202 and the second portion of the aerodynamic device 302 are connected they are indirectly connected with each other, namely via the buckling element 31. As the buckling element 31 is in principle deformable, in particular for loads above the stability limit 43, the aerodynamic device 30 can be seen as being attached to the wind turbine rotor blade 20 in a flexible manner. If the stability limit 43 is set wisely, the flexible arrangement of the aerodynamic device 30 with regard to the wind turbine rotor blade 20 can be exploited in order to efficiently manipulate the load acting on the wind turbine rotor blade 20, and even the wind turbine as a whole.

Figure 5 shows an exemplary design of an aerodynamic device 30 and a buckling element 31. The buckling element 31 is made of thin plastics material. The first portion of the aerodynamic device 301, which is arranged and prepared for being connected to a first portion of a wind turbine rotor blade 201 (not shown), can be seen. Furthermore, a compressive force 41, acting in parallel to the longitudinal dimension of the buckling element 31 is shown. The compressive force 41 exceeds the stability limit 43 of the buckling element, thus the buckling element 31 deforms significantly. For comparison, the un-deformed aerodynamic device 501 is shown in dashed lines.

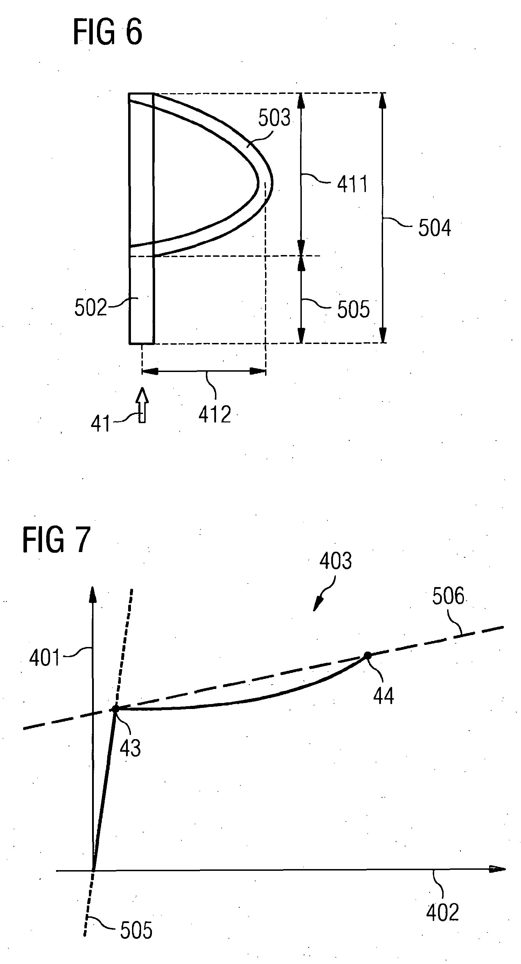

Figure 6 shows a buckling element 31, once in an un-deformed state 502, and once in a deformed state 503 due to compressive force 41 acting along the longitudinal dimension of the buckling element 31. The deformation of the buckling element 31 can be characterized by a deformation parallel to the compressive force 411 and a deformation perpendicular to the compressive force 412. Note that the total extension of the buckling element 31 parallel to the compressive force 41 in the un-deformed state 504 decreases by the amount 505.

Figure 7 shows an exemplary load-deformation curve 403 of a buckling element 31. The load-deformation curve 403 shows the load 401 acting on the buckling element 31, and the resulting deformation 402. It can be seen that for loads up to a stability limit 43 the resulting deformation 402 is relatively small. As a consequence, the slope of the load-deformation curve 403 up to the stability limit 43 is large. At the stability limit 43 the slope of the load-deformation curve 403 changes abruptly. In the example shown in Figure 7, the slope of the load-deformation curve 403 is significantly smaller in the section between the stability limit 43 and an elastic limit 44. Note that the section up to the stability limit 43 is also referred to as the first section and the section between the stability limit 43 and the elastic limit 44 is also referred to as the second section.

As can be seen, the slope is varying in the second section of the exemplary load-deformation curve 403 of Figure 7. Thus, for a meaningful comparison of the slopes of the load-deformation curve 403 in the first and second section, advantageously, the average slopes 505, 506 of the load-deformation curve 403 in the first and second section, respectively, are compared. It can be seen, that in Figure 7, the average slope of the second section 506 is at least three times greater than the average slope of the first section 505.

The stability limit 43 is also referred to as a buckling instability. Descriptively speaking, the buckling element 43 does not experience much deformation 402 for loads 401 up to the stability limit 43; however, for loads exceeding the stability limit 43 this changes abruptly and small incremental loads lead to relatively large incremental deformation.

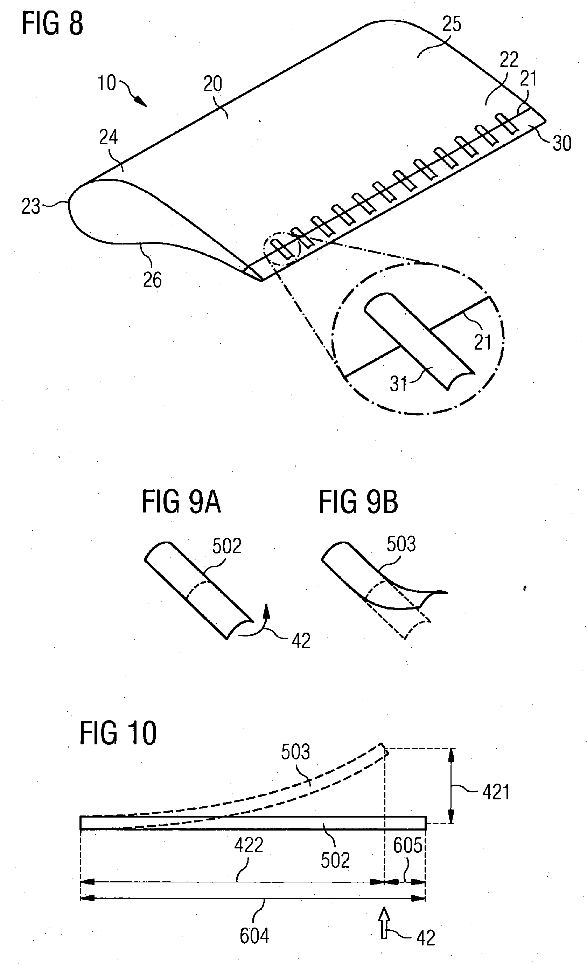

Figure 8 shows another embodiment of an arrangement 10, comprising a wind turbine rotor blade 20 and an aerodynamic device 30, both items 20, 30 being attached to each other by means of a set of buckling elements 31. The buckling elements 31 are made of thin plastics material.

The wind turbine rotor blade 20 comprises a suction side 25, a pressure side 26, a leading edge 23 and a trailing edge 21. The trailing edge 21 has the shape of a flat back. The aerodynamic device 30 effectively prolongs the chord length of the chord lines 27 (not shown), at least during the un-deformed state of the buckling elements 31 as shown in Figure 8. Each buckling element 31 of the set of buckling elements 31 is shaped as a slightly curved strip. The slight curvature gives additional stability to the buckling element 31.

Figure 9a illustrates the buckling element 31 as such in a un-deformed state 502. It can be seen that it is arranged and prepared that a bending moment 42 acts on one of the ends of the buckling element 31.

Figure 9b shows the same buckling element 31 as in Figure 9a in a deformed state 503. The influence of the bending moment 42 acting on the buckling element 31 can well be seen. The impact of a set of deformed buckling elements 31 on the arrangement as shown in Figure 8 can well be imagined: The aerodynamic device 30 would snap towards the suction side 25 and thus the wind flow characteristics, in particular at the trailing edge section 22, changes significantly.

Finally, Figure 10 shows a comparison between a buckling element in a un-deformed state 502 and a deformed state 503. It can be seen, that the deformation shown in Figure 10 is due to a bending moment 42, which acts perpendicularly to the main extension of the buckling element 31. The deformation of the buckling element 31 can be characterized by a deformation parallel to the bending moment 421 and a deformation perpendicular to the bending moment 422. Note that the total extension of the buckling element 31 parallel to the bending moment 42 in the un-deformed state 604 decreases by the amount 605.

## Claims

1. Arrangement (10) comprising a wind turbine rotor blade (20) and an aerodynamic device (30),
wherein
- the wind turbine rotor blade (20) comprises a trailing edge (21), surrounded by a trailing edge section (22),
- the aerodynamic device (30) comprises a buckling element (31),
- the aerodynamic device (30) comprises a flap, the buckling element (31) comprises a stability limit (43) and an elastic limit (44), wherein the stability limit (43) is smaller than the elastic limit (44),
- the buckling element (31) is configured to deform elastically if a load, which is smaller than the elastic limit (44), acts on the buckling element (31), and
- the buckling element (31) abruptly deforms if a load of about the size of the stability limit (43) acts on the buckling element (31), such that the aerodynamic properties of the arrangement (10) change and strain on the wind turbine rotor blade (20) is passively alleviated
- **characterized in that** the aerodynamic device (30) is attached to the wind turbine rotor blade (20) at the trailing edge section (22).

2. Arrangement (10) according to claim 1,
wherein the ratio of the load acting on the buckling element (31) and its deformation (411, 412, 421, 422) is substantially constant for loads that are smaller than the stability limit (43).

3. Arrangement (10) according to one of the preceding claims,
wherein the average ratio of the load acting on the buckling element (31) and its deformation (411, 412, 421, 422) is smaller for loads between the stability limit (43) and the elastic limit (44), compared to the average ratio of the load acting on the buckling element (31) and its deformation (411, 412, 421, 422) for loads smaller than the stability limit (43).

4. Arrangement (10) according to one of the preceding claims,
wherein
- a load-deformation curve (403), which is defined by the load acting on the buckling element (31) and its deformation (411, 412, 421, 422), comprises a first section for loads smaller than the stability limit (43) and a second section for loads between the stability limit (43) and the elastic limit (44), and
- the average slope of the load-deformation curve (403) in the first section is greater than the average slope of the load-deformation curve (403) in the second section.

5. Arrangement (10) according to claim 4,
wherein the average slope of the load-deformation curve (403) in the first section is at least three times greater, in particular at least five times greater, than the average slope of the load-deformation curve (403) in the second section.

6. Arrangement (10) according to one of the preceding claims,
wherein the buckling element (31) is configured such that the size of the stability limit (43) is adjusted such that an alleviation of the strain on the wind turbine rotor blade (20) is realized for extreme loads on the wind turbine rotor blade (20), in particular extreme wind loads and/or extreme wind gusts.

7. Arrangement (10) according to one of the preceding claims,
wherein the aerodynamic device (30) comprises a serrated panel.

8. Arrangement (10) according to one of the preceding claims,
wherein
- the wind turbine rotor blade (20) comprises a tip (283) and a root (281), and
- the aerodynamic device (30) is attached to the wind turbine rotor blade (20) close to the tip (283).

9. Arrangement (10) according to one of the preceding claims,
wherein
- the wind turbine rotor blade (20) comprises a suction side (25) and a pressure side (26), and
- for a load exceeding the stability limit (43) the buckling element (31) is deflected such that a wind flow (11) from a leading edge (23) of the wind turbine rotor blade (20) to the trailing edge section (22) along the pressure side (26) is deflected towards the suction side (26), thus decreasing the aerodynamic lift of the wind turbine rotor blade (20).

10. Arrangement (10) according to one of the preceding claims,
wherein the aerodynamic device (30) prolongs a chord line (27) of the wind turbine rotor blade (20).

11. Arrangement (10) according to one of the preceding claims,
wherein the load acting on the buckling element (31) is mainly due to a compressive force (41), which is directed substantially parallel to the direction of the largest dimension of the buckling element (31).

12. Arrangement (10) according to one of the preceding claims,
wherein
- a first portion of the aerodynamic device (301) is directly connected to a first portion of the wind turbine rotor blade (201),
- a second portion of the aerodynamic device (302) is connected to a second portion of the wind turbine rotor blade (202) via the buckling element (31), and
- the distance between the second portion of the aerodynamic device (302) and the second portion of the wind turbine rotor blade (202) decreases abruptly if a load of about the size of the stability limit (43) is applied to the buckling element (31).

13. Arrangement (10) according to one of the claims 1 to 10,
wherein the load acting on the buckling element (31) induces a bending moment (42), which is directed substantially perpendicular to the direction of the largest dimension of the buckling element (31).

14. Use of a buckling element (31) for passively alleviating strain on a wind turbine rotor blade (20),
wherein
- the wind turbine rotor blade (20) comprises a trailing edge (21), surrounded by a trailing edge section (22),
- the buckling element (31) is at least a part of an aerodynamic device (30), which aerodynamic device (30) comprises a flap
- the buckling element (31) comprises a stability limit (43) and an elastic limit (44), wherein the stability limit (43) is smaller than the elastic limit (44),
- the buckling element (31) is configured to deform elastically if a load, which is smaller than the elastic limit (43), acts on the buckling element (31), and
- the buckling element (31) abruptly deforms if a load of about the size of the stability limit (43) acts on the buckling element (31)
- **characterized in that** the aerodynamic device (30) is arranged and prepared for being attached to the wind turbine rotor blade (20) at the trailing edge section (22).

## Patentansprüche

1. Anordnung (10), die ein Windturbinenrotorblatt (20) und eine aerodynamische Vorrichtung (30) umfasst,
wobei
- das Windturbinenrotorblatt (20) eine Hinterkante (21) umfasst, die durch ein Hinterkantenteil (22) eingefasst ist,
- die aerodynamische Vorrichtung (30) ein Knickelement (31) umfasst,
- die aerodynamische Vorrichtung (30) eine Klappe umfasst,
- das Knickelement (31) eine Stabilitätsgrenze (43) und eine Elastizitätsgrenze (44) aufweist, wobei die Stabilitätsgrenze (43) unter der Elastizitätsgrenze (44) liegt,
- das Knickelement (31) so konfiguriert ist, dass es sich elastisch verformt, wenn eine Last darauf einwirkt, die unter der Elastizitätsgrenze (44) liegt, und
- sich das Knickelement (31) plötzlich verformt, wenn eine Last darauf einwirkt, die in etwa der Höhe der Stabilitätsgrenze (43) entspricht, so dass sich die aerodynamischen Eigenschaften der Anordnung (10) ändern und eine Belastung des Windturbinenrotorblatts (20) passiv vermindert wird,
- **dadurch gekennzeichnet, dass** die aerodynamische Vorrichtung (30) am Hinterkantenteil (22) an dem Windturbinenrotorblatt (20) angebracht ist.

2. Anordnung (10) nach Anspruch 1,
bei der das Verhältnis der auf das Knickelement (31) einwirkenden Last und seiner Verformung (411, 412, 421, 422) für Lasten, die unter der Stabilitätsgrenze (43) liegen, im Wesentlichen konstant ist.

3. Anordnung (10) nach einem der vorhergehenden Ansprüche,
bei der das durchschnittliche Verhältnis der auf das Knickelement (31) einwirkenden Last und seiner Verformung (411, 412, 421, 422) für zwischen der Stabilitätsgrenze (43) und der Elastizitätsgrenze (44) liegende Lasten im Vergleich zum durchschnittlichen Verhältnis der auf das Knickelement (31) einwirkenden Last und seiner Verformung (411, 412, 421, 422) für unter der Stabilitätsgrenze (43) liegende Lasten geringer ist.

4. Anordnung (10) nach einem der vorhergehenden Ansprüche, wobei
- eine Last-Verformungskurve (403), die durch die auf das Knickelement (31) einwirkende Last und seine Verformung (411, 412, 421, 422) definiert wird, einen ersten Teil für Lasten, die unter der Stabilitätsgrenze (43) liegen, und einen zweiten Teil für Lasten umfasst, die zwischen der Stabilitätsgrenze (43) und der Elastizitätsgrenze (44) liegen, und
- die durchschnittliche Steigung der Last-Verformungskurve (403) im ersten Teil größer ist als im zweiten Teil.

5. Anordnung (10) nach Anspruch 4,
wobei die durchschnittliche Steigung der Last-Verformungskurve (403) im ersten Teil mindestens dreimal, insbesondere mindestens fünfmal größer ist als im zweiten Teil.

6. Anordnung (10) nach einem der vorhergehenden Ansprüche,
bei der das Knickelement (31) so konfiguriert ist, dass die Höhe der Stabilitätsgrenze (43) so angepasst ist, dass eine Verminderung der Belastung des Windturbinenrotorblatts (20) bei extremen Lasten am Windturbinenrotorblatt (20), insbesondere extremen Windlasten und/oder Windböen, erreicht wird.

7. Anordnung (10) nach einem der vorhergehenden Ansprüche,
bei der die aerodynamische Vorrichtung (30) eine gezackte Platte umfasst.

8. Anordnung (10) nach einem der vorhergehenden Ansprüche, bei der
- das Windturbinenrotorblatt (20) eine Spitze (283) und eine Wurzel (281) umfasst und
- die aerodynamische Vorrichtung (30) in der Nähe der Spitze (283) an dem Windturbinenrotorblatt (20) angebracht ist.

9. Anordnung (10) nach einem der vorhergehenden Ansprüche, bei der
- das Windturbinenrotorblatt (20) eine Saugseite (25) und eine Druckseite (26) umfasst und
- das Knickelement (31) bei einer die Stabilitätsgrenze (43) überschreitenden Last so ausgelenkt wird, dass eine Windströmung (11) von einer Vorderkante (23) des Windturbinenrotorblatts (20) entlang der Druckseite (26) zum Hinterkantenteil (22) zur Saugseite (26) abgelenkt wird, wodurch sich der aerodynamische Auftrieb des Windturbinenrotorblatts (20) verringert.

10. Anordnung (10) nach einem der vorhergehenden Ansprüche,
bei der die aerodynamische Vorrichtung (30) eine Profilsehne (27) des Windturbinenrotorblatts (20) verlängert.

11. Anordnung (10) nach einem der vorhergehenden Ansprüche,
bei der die auf das Knickelement (31) einwirkende Last hauptsächlich auf eine Druckkraft (41) zurückzuführen ist, die im Wesentlichen parallel zur Richtung der größten Abmessung des Knickelements (31) gerichtet ist.

12. Anordnung (10) nach einem der vorhergehenden Ansprüche,
bei der
- ein erster Abschnitt der aerodynamischen Vorrichtung (301) direkt mit einem ersten Abschnitt des Windturbinenrotorblatts (201) verbunden ist,
- ein zweiter Abschnitt der aerodynamischen Vorrichtung (302) über das Knickelement (31) mit einem zweiten Abschnitt des Windturbinenrotorblatts (202) verbunden ist und
- sich der Abstand zwischen dem zweiten Abschnitt der aerodynamischen Vorrichtung (302) und dem zweiten Abschnitt des Windturbinenrotorblatts (202) plötzlich verringert, wenn eine Last auf das Knickelement (31) einwirkt, die in etwa der Höhe der Stabilitätsgrenze (43) entspricht.

13. Anordnung (10) nach einem der Ansprüche 1 bis 10,
bei der die auf das Knickelement (31) einwirkende Last ein Biegemoment (42) verursacht, das im Wesentlichen senkrecht zur Richtung der größten Abmessung des Knickelements (31) gerichtet ist.

14. Verwendung eines Knickelements (31) zum passiven Vermindern einer Belastung eines Windturbinenrotorblatts (20), wobei
- das Windturbinenrotorblatt (20) eine Hinterkante (21) umfasst, die durch ein Hinterkantenteil (22) eingefasst ist,
- das Knickelement (31) zumindest ein Bestandteil einer aerodynamischen Vorrichtung (30) ist, die eine Klappe umfasst,
- das Knickelement (31) eine Stabilitätsgrenze (43) und eine Elastizitätsgrenze (44) aufweist, wobei die Stabilitätsgrenze (43) geringer ist als die Elastizitätsgrenze (44),
- das Knickelement (31) so konfiguriert ist, dass es sich elastisch verformt, wenn eine Last darauf einwirkt, die unter der Elastizitätsgrenze (43) liegt, und
- sich das Knickelement (31) plötzlich verformt, wenn eine Last darauf einwirkt, die in etwa dem Maß der Stabilitätsgrenze (43) entspricht,
- **dadurch gekennzeichnet, dass** die aerodynamische Vorrichtung (30) zum Anbringen am Hinterkantenteil (22) an dem Windturbinenrotorblatt (20) angeordnet und ausgelegt ist.

## Revendications

1. Agencement (10) comprenant une pale de rotor de turbine éolienne (20) et un dispositif aérodynamique (30),
dans lequel
- la pale de rotor de turbine éolienne (20) comprend un bord de fuite (21), entouré d'une section de bord de fuite (22),
- le dispositif aérodynamique (30) comprend un élément de flambage (31),
- le dispositif aérodynamique (30) comprend un volet,
- l'élément de flambage (31) comprend une limite de stabilité (43) et une limite élastique (44), dans lequel la limite de stabilité (43) est inférieure à la limite élastique (44),
- l'élément de flambage (31) est configuré pour se déformer de manière élastique si une charge, qui est inférieure à la limite élastique (44), agit sur l'élément de flambage (31), et
- l'élément de flambage (31) se déforme brusquement si une charge d'environ la taille de la limite de stabilité (43) agit sur l'élément de flambage (31), de telle sorte que les propriétés aérodynamiques de l'agencement (10) changent et la contrainte sur la pale de rotor de turbine éolienne (20) est atténuée de manière passive,
**caractérisé en ce que** le dispositif aérodynamique (30) est fixé à la pale de rotor de turbine éolienne (20) au niveau de la section de bord de fuite (22).

2. Agencement (10) selon la revendication 1,
dans lequel le rapport de la charge agissant sur l'élément de flambage (31) et sa déformation (411, 412, 421, 422) est sensiblement constant pour des charges qui sont inférieures à la limite de stabilité (43).

3. Agencement (10) selon l'une des revendications précédentes, dans lequel le rapport moyen de la charge agissant sur l'élément de flambage (31) et sa déformation (411, 412, 421, 422) est plus faible pour des charges comprises entre la limite de stabilité (43) et la limite élastique (44), par rapport au rapport moyen de la charge agissant sur l'élément de flambage (31) et sa déformation (411, 412, 421, 422) pour des charges inférieures à la limite de stabilité (43).

4. Agencement (10) selon l'une des revendications précédentes, dans lequel
- une courbe de déformation de charge (403), qui est définie par la charge agissant sur l'élément de flambage (31) et sa déformation (411, 412, 421, 422), comprend une première section pour des charges inférieures à la limite de stabilité (43) et une seconde section pour des charges comprises entre la limite de stabilité (43) et la limite élastique (44), et
- la pente moyenne de la courbe de déformation de charge (403) dans la première section est supérieure à la pente moyenne de la courbe de déformation de charge (403) dans la seconde section.

5. Agencement (10) selon la revendication 4,
dans lequel la pente moyenne de la courbe de déformation de charge (403) dans la première section est au moins trois fois supérieure, en particulier au moins cinq fois supérieure, à la pente moyenne de la courbe de déformation de charge (403) dans la seconde section.

6. Agencement (10) selon l'une des revendications précédentes, dans lequel l'élément de flambage (31) est configuré de telle sorte que la taille de la limite de stabilité (43) est ajustée de telle sorte que l'atténuation de la contrainte sur la pale de rotor de turbine éolienne (20) est réalisée pour des charges extrêmes sur la pale de rotor de turbine éolienne (20), en particulier des charges de vents extrêmes et/ou des rafales de vent extrêmes.

7. Agencement (10) selon l'une des revendications précédentes, dans lequel le dispositif aérodynamique (30) comprend un panneau dentelé.

8. Agencement (10) selon l'une des revendications précédentes, dans lequel
- la pale de rotor de turbine éolienne (20) comprend une pointe (283) et une racine (281), et
- le dispositif aérodynamique (30) est fixé à la pale de rotor de turbine éolienne (20) à proximité de la pointe (283).

9. Agencement (10) selon l'une des revendications précédentes,
dans lequel
- la pale de rotor de turbine éolienne (20) comprend un côté aspiration (25) et un côté pression (26), et
- pour une charge dépassant la limite de stabilité (43), l'élément de flambage (31) est dévié de telle sorte qu'un flux de vent (11) allant d'un bord d'attaque (23) de la pale de rotor de turbine éolienne (20) à la section de bord de fuite (22) le long du côté pression (26) est dévié vers le côté aspiration (26), diminuant ainsi la portance aérodynamique de la pale de rotor de turbine éolienne (20).

10. Agencement (10) selon l'une des revendications précédentes,
dans lequel le dispositif aérodynamique (30) prolonge une ligne de corde (27) de la pale de rotor de turbine éolienne (20).

11. Agencement (10) selon l'une des revendications précédentes,
dans lequel la charge agissant sur l'élément de flambage (31) est principalement due à une force de compression (41), qui est dirigée sensiblement parallèlement à la direction de la plus grande dimension de l'élément de flambage (31).

12. Agencement (10) selon l'une des revendications précédentes,
dans lequel
- une première partie du dispositif aérodynamique (301) est reliée directement à une première partie de la pale de rotor de turbine éolienne (201),
- une seconde partie du dispositif aérodynamique (302) est reliée à une seconde partie de la pale de rotor de turbine éolienne (202) par l'intermédiaire de l'élément de flambage (31), et
- la distance entre la seconde partie du dispositif aérodynamique (302) et la seconde partie de la pale de rotor de turbine éolienne (202) diminue brusquement si une charge d'environ la taille de la limite de stabilité (43) est appliquée à l'élément de flambage (31).

13. Agencement (10) selon l'une des revendications 1 à 10, dans lequel la charge agissant sur l'élément de flambage (31) induit un moment de flexion (42), qui est dirigé sensiblement perpendiculairement à la direction de la plus grande dimension de l'élément de flambage (31).

14. Utilisation d'un élément de flambage (31) pour atténuer de manière passive la contrainte sur une pale de rotor de turbine éolienne (20),
dans laquelle
- la pale de rotor de turbine éolienne (20) comprend un bord de fuite (21), entouré d'une section de bord de fuite (22),
- l'élément de flambage (31) constitue au moins une partie d'un dispositif aérodynamique (30), lequel dispositif aérodynamique (30) comprend un volet,
- l'élément de flambage (31) comprend une limite de stabilité (43) et une limite élastique (44), dans lequel la limite de stabilité (43) est inférieure à la limite élastique (44),
- l'élément de flambage (31) est configuré pour se déformer de manière élastique, si une charge, qui est inférieure à la limite élastique (43), agit sur l'élément de flambage (31), et
- l'élément de flambage (31) se déforme brusquement si une charge d'environ la taille de la limite de stabilité (43) agit sur l'élément de flambage (31),
**caractérisée en ce que** le dispositif aérodynamique (30) est agencé et préparé pour être attaché à la pale de rotor de turbine éolienne (20) au niveau de la section de bord de fuite (22).
